# EUROPEAN PATENT APPLICATION

(11) **EP 4 310 979 A1**
(43) Date of publication of application: **24.01.2024**
(21) Application number: 22929229.7
(22) Date of filing: 26.05.2022
(51) Int. Cl.: H01M 10/058

(54) **TAB FLATTENING DEVICE**

(71) Applicant: Contemporary Amperex Technology Co., Limited, Ningde, Fujian 352100 (CN)
(72) Inventor: YANG, Guozhong, Ningde, Fujian 352100 (CN); SUN, Xiangli, Ningde, Fujian 352100 (CN); LI, Fengdan, Ningde, Fujian 352100 (CN); QIN, Xiong, Ningde, Fujian 352100 (CN); XU, Minjiang, Ningde, Fujian 352100 (CN); PEI, Xu, Ningde, Fujian 352100 (CN); WU, Xiaoping, Ningde, Fujian 352100 (CN); YANG, Chao, Ningde, Fujian 352100 (CN)
(74) Representative: Ziebig Hengelhaupt Intellectual Property Attorneys Patentanwaltskanzlei PartGmbB
(86) International application number: PCT/CN2022/095166
(87) International publication number: WO 2023/225928

(57) **Abstract**

This application relates to a tab flattening device (10). The tab flattening device (10) includes: a roller (100) configured to convey an electrode plate (300), a cover (210), and a flattening portion (220). The surface of the roller (100) is in contact with the electrode plate (300) in a contact region (1001). The cover (210) surrounds the contact region (1001) peripherally and includes a feed-in guide surface (211) oriented toward the contact region (1001). The flattening portion (220) is disposed protrusively on the feed-in guide surface (211), and located opposite to a tab (310) of the electrode plate (300). A tab guide surface (2201) is formed on the flattening portion (220). Along a feed-in direction of the electrode plate (300), the flattening portion (220) is at least partially located upstream of the contact region (1001). By using the tab flattening device (10), the folded part of the tab (310) can be flattened to solve the problems of a folded tab, sagging edges, or a curved tab after the tab (310) is formed, and also to prevent a folded part of the tab (310) from being jammed.

## Description

### TECHNICAL FIELD

This application relates to the technical field of battery manufacturing, and in particular, to a tab flattening device.

### BACKGROUND

Batteries are widely applied to electrical devices such as vehicles, watercraft, or aircraft. To increase the energy density of a battery, a current collector on an electrode plate of the battery shows a tendency to be thinner. However, a thinner current collector makes the tab prone to folding, edge sagging, or bending after the tab is formed.

### SUMMARY

In view of this, it is necessary to provide a tab flattening device to solve the problem that a tab is prone to folding, edge sagging, or bending after being formed.

This application provides a tab flattening device, including: a roller configured to convey an electrode plate, a cover, and a flattening portion. The surface of the roller is in contact with the electrode plate in a contact region. The cover surrounds the contact region peripherally and includes a feed-in guide surface oriented toward the contact region. The flattening portion is disposed protrusively on the feed-in guide surface, and located opposite to a tab of the electrode plate. A tab guide surface is formed on the flattening portion. Along a feed-in direction of the electrode plate, the flattening portion is at least partially located upstream of the contact region.

In the technical solution of this application, when the tab flattening device is in use, the electrode plate may be conveyed by the roller, so that the tab of the electrode plate can be passed into the space between the roller and the tab guide surface. In the process of passing the tab of the electrode plate into the space between the roller and the tab guide surface, the flattening portion is at least partially located upstream of the contact region along the feed-in direction of the electrode plate. In addition, the flattening portion is located opposite to the tab of the electrode plate. Therefore, with the electrode plate being passed in progressively, the flattening portion can apply a flattening force to the tab of the electrode plate to unfold the folded part of the tab. In this process, the flattening force is applied by the flattening portion to the tab of the electrode plate before a tab placement part of the electrode plate is passed into the space between the tab guide surface and a position in the contact region on the roller. Understandably, on the one hand, in the process of flattening the tab by the flattening portion, the tab is relatively distant from the contact region of the roller, and the tab is not prone to get jammed between the flattening portion and the roller. In this way, the tab can move smoothly along the feed-in direction as driven by the roller, and can be flattened by the flattening portion. On the other hand, before the tab placement part of the electrode plate contacts the contact region of the roller, the tab has been roughly unfolded. The tab is not prone to get jammed between the flattening portion and the roller in the process of being passed into the space between the tab guide surface and the position in the contact region on the roller. In this way, the folded part of the tab can be flattened to solve the problem of folding, edge sagging or bending of the tab after the tab is formed, and to prevent the folded part of the tab from being jammed.

In an embodiment, the contact region includes a feed-in position from which the electrode plate is rolled in. A distance between a free end of the feed-in guide surface and the electrode plate is greater than a distance between the feed-in guide surface at the feed-in position and the electrode plate. In this way, in the process of passing the electrode plate into the space between the roller and the tab guide surface along the feed-in direction, the distance between the flattening portion disposed protrusively on the feed-in guide surface and the tab of the electrode plate diminishes, thereby unfolding the folded part of the tab more smoothly and playing a role of gradually flattening the tab of the electrode plate.

In an embodiment, the free end points to a part of the feed-in guide surface at the feed-in position along a first direction. The first direction is at an acute angle α₁ to the feed-in direction of the electrode plate. Understandably, in the process of passing the electrode plate into the space between the roller and the tab guide surface along the feed-in direction, the distance between the flattening portion disposed protrusively on the feed-in guide surface and the tab of the electrode plate diminishes gradually, thereby gradually unfolding the folded part of the tab, gradually flattening the tab of the electrode plate more gently, avoiding damage to the tab during the flattening, and achieving a good effect of flattening the tab.

In an embodiment, the angle α₁ is 1° to 45°. In this way, the tab can be flattened properly by using the flattening portion.

In an embodiment, the angle α₁ is 7° to 15°. Such arrangement can not only ensure that the tab can be smoothly passed into the space between the roller and the tab guide surface, but also enable an optimal angle at which the tab is passed into the space between the roller and the tab guide surface, thereby achieving a good flattening effect.

In an embodiment, the tab guide surface is disposed on a side of the flattening portion, the side being away from the feed-in guide surface. An angle between the feed-in guide surface and the tab guide surface is α₂, and α₁ is greater than α₂. Understandably, a side of the flattening portion, which is away from the feed-in guide surface, is at a specified distance from the tab between a take-up roller and the tab guide surface. This distance diminishes gradually to ensure that the flattening portion can gradually flatten the tab of the electrode plate more gently.

In an embodiment, a distance between the free end of the feed-in guide surface and the electrode plate is H₁, and a width of the tab of the electrode plate is D, satisfying: H₁ ≥ 1.25 × D. Understandably, a turn-up height of an overturned part of the tab is not greater than the width of the tab. The arrangement of H₁ ≥ 1.25 × D can reliably ensure that the flattening portion disposed protrusively on the feed-in guide surface is in contact with the overturned part of the tab so as to apply a flattening force to the folded part of the tab to unfold the folded part, thereby improving the flattening effect.

In an embodiment, a distance between the feed-in guide surface at the feed-in position and the electrode plate is H₂, and H₂ is 0 to 3 mm. Such arrangement not only avoids jamming of the electrode plate caused by a processing error, but also ensures a good flattening effect of the tab.

In an embodiment, the flattening portion includes a plurality of flattening racks arranged at intervals on the feed-in guide surface. Each of the flattening racks extends from the free end of the feed-in guide surface toward a part of the feed-in guide surface at the feed-in position. By using the plurality of flattening racks, the folded part of the tab can be contacted more sufficiently, so as to flatten the folded part of the tab more efficiently.

In an embodiment, each of the flattening racks includes a helical gear section. The helical gear section is disposed obliquely in a width direction of the electrode plate. Such arrangement enables the same helical gear section to contact the folded part of the tab more sufficiently, so as to ensure that a plurality of flattening racks can apply a flattening force to the tab more sufficiently to unfold the folded part of the tab, thereby improving the effect of flattening the tab.

In an embodiment, the free end of the feed-in guide surface points to a part of the feed-in guide surface at the feed-in position along a first direction. An angle between the helical gear section and the first direction is β, and β is 0° to 60°. Such arrangement not only ensures a good effect of flattening the tab, but also avoids an impact caused during the flattening operation.

In an embodiment, at least one of the flattening racks further includes a straight gear section. One end of the straight gear section is connected to the helical gear section in the flattening rack in which the straight gear section is currently located, and another end of the straight gear section extends to the free end of the feed-in guide surface along the first direction. The straight gear section extending along the first direction can contact the turn-up part of the tab. With the tab being passed in, the turn-up part of the tab can be pressed down by using the straight gear section, and the tab is flattened gradually by use of the helical gear section to improve the effect of flattening the tab.

In an embodiment, a width dimension of the plurality of flattening racks arranged on the feed-in guide surface is W₁, and W₁ is greater than a width of the tab. The width of the tab is a dimension of the tab in a direction parallel to a width direction of the electrode plate. The dimension of the folded part of the tab in the direction parallel to the width direction of the electrode plate is not greater than the width of the tab. By setting W₁ to be greater than the width of the tab, it is ensured that the plurality of flattening racks can contact the folded part of the tab more sufficiently, so as to facilitate the operation of flattening the folded part of the tab and improve the effect of flattening the tab.

In an embodiment, a distance between two adjacent flattening racks is W₂, and W₂ is 3 mm to 5 mm. Such arrangement ensures a good effect of flattening the tab without being prone to jam the tab.

In an embodiment, the cover further includes a curved corner surface connected to the feed-in guide surface. The curved corner surface is in clearance fit with an outer peripheral wall of the roller. After the folded part of the tab is flattened by using the flattening portion disposed protrusively on the feed-in guide surface, the tab of the electrode plate can be passed into the space between the curved corner surface and the outer peripheral wall of the roller. The curved corner surface can guide the tab of the electrode plate, thereby improving the effect of flattening the tab.

In an embodiment, the cover further includes a feed-out guide surface. The feed-out guide surface and the feed-in guide surface are connected to two ends of the curved corner surface respectively in an arc length direction. The disposed feed-out guide surface can guide the electrode plate into the space between the feed-out guide surface and the roller in a case of reverse winding of the electrode plate.

In an embodiment, the free end of the feed-in guide surface includes a first turned-out arc face extending out toward a side away from the electrode plate. The feed-in guide surface is disposed along a tangential direction of the first turned-out arc face. The arc-shaped first turned-out arc face can well protect the electrode plate passed in, and prevent the electrode plate from being damaged by an impact.

### BRIEF DESCRIPTION OF DRAWINGS

By reading the following detailed description of exemplary embodiments, a person of ordinary skill in the art becomes clearly aware of various other advantages and benefits. The drawings are merely intended to illustrate the exemplary embodiments, but not to limit this application. In all the drawings, the same reference numeral represents the same component. List of reference numerals:
FIG. 1 is a schematic structural diagram of a tab flattening device according to an embodiment of this application;
FIG. 2 is a side view of a tab flattening device according to an embodiment of this application;
FIG. 3 is a schematic structural diagram of a tab flattening structure according to an embodiment of this application;
FIG. 4 is a side view of a tab flattening structure according to an embodiment of this application;
FIG. 5 is a bottom view of a tab flattening structure according to an embodiment of this application;
FIG. 6 is a schematic structural diagram of a tab flattening device according to another embodiment of this application;
FIG. 7 is a side view of a tab flattening device according to another embodiment of this application; and
FIG. 8 is a side view of a tab flattening structure according to another embodiment of this application.

10. tab flattening device; 100. roller; 1001. contact region; 110. fixed shaft; 120. rotating roller; 200. tab flattening structure; 210. cover; 211. feed-in guide surface; 2111. free end; 212. curved corner surface; 213. feed-out guide surface; 214. first turned-out arc face; 215. second turned-out arc face; 216. first mounting hole; 217. bolt; 220. flattening portion; 2201. tab guide surface; 221. flattening rack; 2211. helical gear section; 2212. straight gear section; 230. mounting base; 300. electrode plate; 310. tab.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Batteries are widely applied to electrical devices such as vehicles, watercraft, or aircraft. To increase the energy density of a battery, a current collector on an electrode plate of the battery shows a tendency to be thinner. However, a thinner current collector makes the tab prone to folding, edge sagging, or bending after the tab is formed.

The inventor of this application has found through research that, in the related art, the electrode plate is passed between two limiting components to flatten a tab. However, this manner causes a folded part of the tab to be prone to jam up between the two limiting components, thereby causing damage to the tab.

In view of this, through in-depth research, the inventor of this application has designed a tab flattening device to flatten the folded part of the tab. The tab flattening device can flatten the folded part of the tab without jamming the folded part of the tab, thereby flattening the tab effectively.

The tab flattening device disclosed in an embodiment of this application is applicable to, but not limited to use in, production of batteries. The battery may be a battery cell, a battery module, or a battery pack. The tab flattening device disclosed in this application may be used to flatten a tab, thereby improving the production quality of the battery and safety performance of the battery.

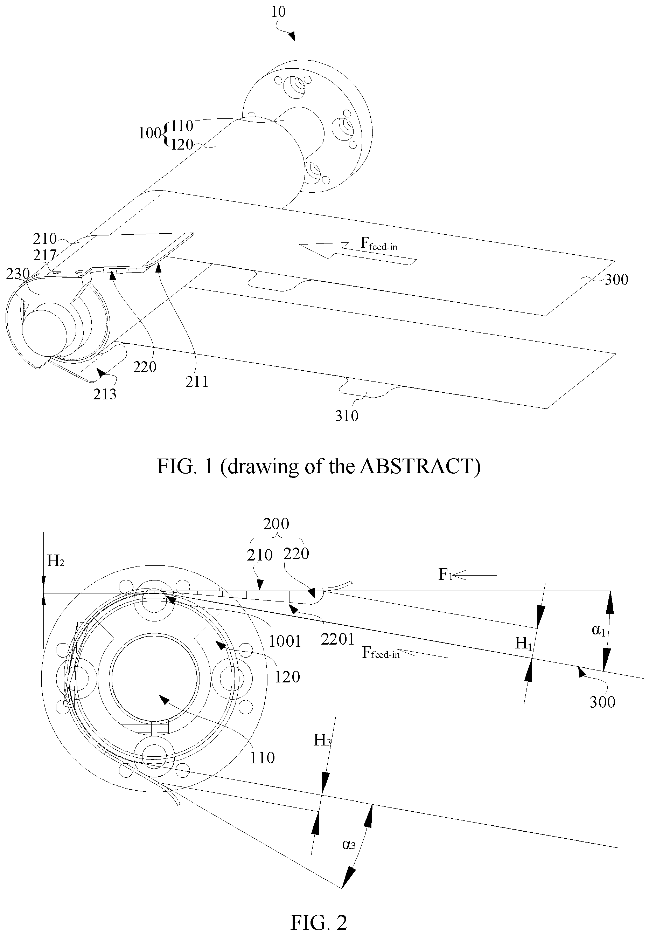

FIG. 1 is a schematic structural diagram of a tab flattening device 10 according to an embodiment of this application, and FIG. 2 is a side view of a tab flattening device 10 according to an embodiment of this application.

Referring to FIG. 1 and FIG. 2, the tab flattening device 10 includes a roller 100 and a tab flattening structure 200.

The roller 100 includes a fixed shaft 110 and a rotating roller 120 disposed on the fixed shaft 110. The fixed shaft 110 may be mounted on an appropriate mounting frame. The rotating roller 120 can rotate relative to the fixed shaft 110. The rotating roller 120 may rotate as driven by a driving mechanism, so as to convey an electrode plate 300. In this way, a tab 310 of the conveyed electrode plate 300 can be flattened conveniently by using a tab flattening structure 200.

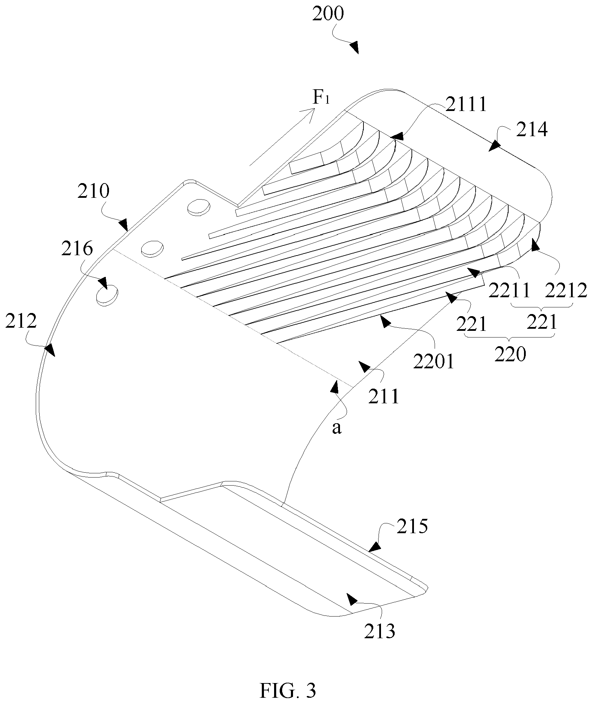

FIG. 3 is a schematic structural diagram of a tab flattening structure 200 according to an embodiment of this application.

In some embodiments of this application, referring to FIG. 1 to FIG. 3, the tab flattening device 10 according to an embodiment of this application includes a roller 100 configured to convey the electrode plate 300 and a tab flattening structure 200. The surface of the roller 100 is in contact with the electrode plate 300 in a contact region 1001. The tab flattening structure 200 includes a cover 210 and a flattening portion 220. The cover 210 surrounds the contact region 1001 peripherally. The cover 210 includes a feed-in guide surface 211 oriented toward the contact region 1001. The flattening portion 220 is disposed protrusively on the feed-in guide surface 211, and located opposite to a tab 310 of the electrode plate 300. A tab guide surface 2201 is formed on the flattening portion 220. Along a feed-in direction of the electrode plate 300, the flattening portion 220 is at least partially located upstream of the contact region 1001.

The "cover 210" means a component that can surround the roller 100 peripherally and can be mounted to the roller 100. The cover 210 is roughly plate-shaped. The cover 210 may include a curved plate portion, and may include a straight plate portion, and may include both a curved plate portion and a straight plate portion, without being particularly limited herein.

The "flattening portion 220" means a component disposed protrusively on the feed-in guide surface 211 and capable of forming a tab guide surface 2201, so that a flattening force can be applied to the tab 310 of the conveyed electrode plate 300 to unfold a folded part of the tab 310. As an example, the flattening portion 220 roughly assumes a comb teeth shape, and can apply a flattening force to the tab 310 of the conveyed electrode plate 300 to unfold the folded part of the tab 310.

The "feed-in guide surface 211" means a surface capable of guiding the tab 310 passed into the space between the roller 100 and the feed-in guide surface 211.

The "free end 2111" means a side away from the contact region 1001 on the feed-in guide surface 211. The tab 310 can pass through the free end 2111 of the feed-in guide surface 211, and be passed into the space between the contact region 1001 and the flattening portion 220.

The "contact region 1001" means a region in rough contact with the electrode plate 300 in a surface of the roller 100. The flattening portion 220 can be at least partially located upstream of the contact region 1001, so as to flatten the tab 310 of the electrode plate 300 by making better use of the flattening portion 220. As an example, the electrode plate 300 can be disposed around the surface of the roller 100 as conveyed by the roller 100, so as to contact the contact region 1001. The contact region 1001 includes a part around which the electrode plate 300 is disposed on the surface of the roller 100. Alternatively, the electrode plate 300 may contact the contact region 1001 in other ways, without being particularly limited herein.

The "tab guide surface 2201" means a surface capable of applying a flattening force to the tab 310 of the electrode plate 300 to unfold a folded part of the tab 310. The tab guide surface 2201 may be a whole surface, or may be formed of a plurality of independent surfaces, or may be a discontinuous surface formed of a plurality of linear parts, without being particularly limited herein.

When the tab flattening device 10 is in use, the electrode plate 300 may be conveyed by the roller 100, so that the tab 310 of the electrode plate 300 can be passed into the space between the roller 100 and the tab guide surface 2201. In the process of passing the tab 310 of the electrode plate 300 into the space between the roller 100 and the tab guide surface 2201, the flattening portion 220 is at least partially located upstream of the contact region 1001 along the feed-in direction of the electrode plate 300. In addition, the flattening portion 220 is located opposite to the tab 310 of the electrode plate 300. Therefore, with the electrode plate 300 being passed in progressively, the flattening portion 220 can apply a flattening force to the tab 310 of the electrode plate 300 to unfold the folded part of the tab 310. In this process, the flattening force is applied by the flattening portion 220 to the tab 310 of the electrode plate 300 before a tab 310 placement part of the electrode plate 300 is passed into the space between the tab guide surface 2201 and a position in the contact region 1001 on the roller 100. Understandably, on the one hand, in the process of flattening the tab 310 by the flattening portion 220, the tab 310 is relatively distant from the contact region 1001 of the roller 100, and the tab 310 is not prone to get jammed between the flattening portion 220 and the roller 100. In this way, the tab 310 can move smoothly along the feed-in direction F as driven by the roller 100, and can be flattened by the flattening portion 220. On the other hand, before the tab 310 placement part of the electrode plate 300 contacts the contact region 1001 of the roller 100, the tab 310 has been roughly unfolded. The tab 310 is not prone to get jammed between the flattening portion 220 and the roller 100 in the process of being passed into the space between the tab guide surface 2201 and the position in the contact region 1001 on the roller 100. In this way, the folded part of the tab 310 can be flattened to solve the problem of folding, edge sagging or bending of the tab after the tab 310 is formed, and to prevent the folded part of the tab 310 from being jammed.

It is hereby noted that, before the electrode plate 300 is passed in, the folded part of the tab 310 of the electrode plate 300 is turned upward, so that it is convenient to flatten the tab 310 of the electrode plate 300 by using the tab flattening structure 200 disposed around the roller 100.

In some embodiments of this application, referring to FIG. 2 and FIG. 3, the contact region 1001 includes a feed-in position from which the electrode plate 300 is rolled in. A distance between a free end 2111 of the feed-in guide surface 211 and the electrode plate 300 is greater than a distance between the feed-in guide surface 211 at the feed-in position and the electrode plate 300.

With reference to FIG. 2, the distance between the free end 2111 of the feed-in guide surface 211 and the electrode plate 300 is H₁, and the distance between the feed-in guide surface 211 at the feed-in position and the electrode plate 300 is H₂, satisfying: H₁ > H₂.

In this way, in the process of passing the electrode plate 300 into the space between the roller 100 and the tab guide surface 2201 along the feed-in direction F, the distance between the flattening portion 220 disposed protrusively on the feed-in guide surface 211 and the tab 310 of the electrode plate 300 diminishes, thereby unfolding the folded part of the tab 310 more smoothly and playing a role of gradually flattening the tab 310 of the electrode plate 300.

In some embodiments of this application, referring to FIG. 2 and FIG. 3, the free end 2111 points to a part of the feed-in guide surface 211 at the feed-in position along a first direction F1. The first direction F1 is at an acute angle α₁ to the feed-in direction F of the electrode plate 300.

Referring to FIG. 3, the feed-in guide surface 211 at the feed-in position roughly corresponds to the position a in FIG. 3.

Understandably, in the process of passing the electrode plate 300 into the space between the roller 100 and the tab guide surface 2201 along the feed-in direction F, the distance between the flattening portion 220 disposed protrusively on the feed-in guide surface 211 and the tab 310 of the electrode plate 300 diminishes gradually, thereby gradually unfolding the folded part of the tab 310, gradually flattening the tab 310 of the electrode plate 300 more gently, avoiding damage to the tab 310 during the flattening, and achieving a good effect of flattening the tab 310.

In some embodiments of this application, the angle α₁ is 1° to 45°, so that the tab 310 can be flattened properly by using the flattening portion 220.

In some embodiments, α₁ is 1° to 30°. If the angle α₁ is overly large, the tab 310 may fail to be passed into the space between the roller 100 and the tab guide surface 2201 at an optimum angle, and the flattening effect is inferior. If the angle α₁ is overly small, the angle adversely affects the passing of the tab 310 into the space between the roller 100 and the tab guide surface 2201. In view of this, α₁ needs to fall within an appropriate range. For example, α₁ is set to 1° to 30°, thereby ensuring smooth passing of the tab 310 into the space between the roller 100 and the tab guide surface 2201, ensuring an optimum angle at which the tab 310 is passed into the space between the roller 100 and the tab guide surface 2201, and achieving a good flattening effect.

The "angle" at which the tab is passed in is α₁.

In some embodiments of this application, the angle α₁ is 7° to 15°. By using the flattening portion 220, the folded part of the tab 310 can be flattened gradually, and the flattening effect is relatively good.

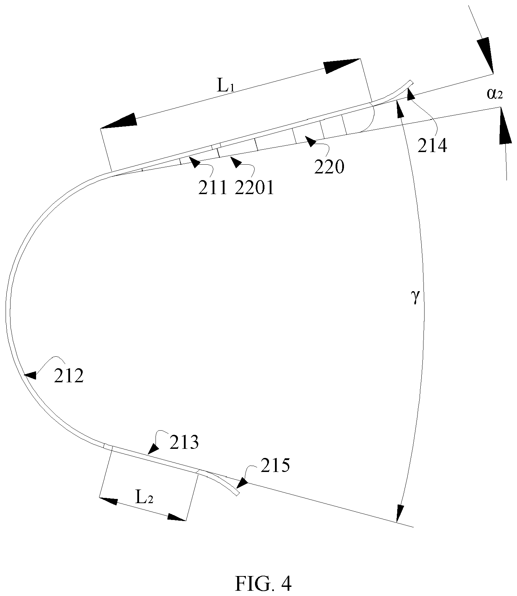

In some embodiments of this application, referring to FIG. 2 and FIG. 4, the tab guide surface 2201 is disposed on a side of the flattening portion 220, the side being away from the feed-in guide surface 211. An angle between the feed-in guide surface 211 and the tab guide surface 2201 is α₂, and α₁ is greater than α₂.

Understandably, the tab guide surface 2201 is at an acute angle α₀ to the feed-in direction F of the electrode plate 300, and α₀ = α₁ - α₂. This enables the tab guide surface 2201 to be at a specified distance from the tab 310 passed into the space between the roller 100 and tab guide surface 2201. This distance diminishes gradually to ensure that the flattening portion 220 can gradually flatten the tab 310 of the electrode plate 300 more gently.

α₂ is 1° to 10°. If α₂ is overly large, α₀ will be overly small and adversely affect the tab 310 being passed in. If α₂ is overly small, α₀ will be overly large and lead to an overly distance between the tab guide surface 2201 and the tab 310 passed in, thereby impairing the flattening effect. In view of this, α₂ needs to be controlled to fall within an appropriate range. For example, α₂ is set to 1° to 10°, and α₂ is set to be smaller than α₁. In this way, it is ensured that the tab 310 can be smoothly passed into the space between the roller 100 and the tab guide surface 2201, and the tab 310 of the electrode plate 300 can be gradually flattened gently by using the flattening portion 220.

In some embodiments of this application, referring to FIG. 1 to FIG. 3, a distance between the free end 2111 of the feed-in guide surface 211 and the electrode plate 300 is H₁, and a width of the tab 310 of the electrode plate 300 is D, satisfying: H₁ ≥ 1.25 × D. The width of the tab 310 is a dimension of the tab 310 in a direction parallel to a width direction of the electrode plate 300.

The width direction of the electrode plate 300 is perpendicular to a length direction of the electrode plate 300. By satisfying H₁ ≥ 1.25 × D, the distance between the free end 2111 of the feed-in guide surface 211 and the electrode plate 300 is caused to be greater than 1.25 times the width of the tab 310.

Understandably, a turn-up height of an overturned part of the tab 310 is not greater than the width of the tab 310. The arrangement of H₁ ≥ 1.25 × D can reliably ensure that the flattening portion 220 disposed protrusively on the feed-in guide surface 211 is in contact with the overturned part of the tab 310 so as to apply a flattening force to the folded part of the tab 310 to unfold the folded part, thereby improving the flattening effect.

In some embodiments, referring to FIG. 2 and FIG. 4, the dimension of the feed-in guide surface 211 along the first direction F1 is L₁. L₁ is roughly inversely proportional to α₁. In this way, it is ensured that the tab 310 can be passed into the space between the roller 100 and the tab guide surface 2201 at an optimum angle and can be flattened by the flattening portion 220 with an appropriate length, thereby achieving a good effect of flattening the tab 310.

In some embodiments of this application, a distance between the feed-in guide surface 211 at the feed-in position and the electrode plate 300 is H₂, and H₂ is 0 to 3 mm.

If H₂ is overly small, the electrode plate 300 may be jammed due to a processing error. If H₂ is overly large, the effect of flattening the tab 310 may be impaired.

Therefore, H₂ needs to be controlled to fall within an appropriate range. For example, H₂ is set to 0 to 3 mm. Specifically, H₂ is appropriately 1 mm.

In some embodiments of this application, referring to FIG. 3, the flattening portion 220 includes a plurality of flattening racks 221 arranged at intervals on the feed-in guide surface 211. Each of the flattening racks 221 extends from the free end 2111 of the feed-in guide surface 211 toward a part of the feed-in guide surface 211 at the feed-in position.

The "flattening rack 221" is a bar-shaped component disposed protrusively on the feed-in guide surface 211 and extending from the free end 2111 toward a part of the feed-in guide surface 211 at the feed-in position. The flattening rack 221 is roughly comb-shaped, and can apply a flattening force to the tab 310 to unfold the folded part of the tab 310.

By using the plurality of flattening racks 221, the folded part of the tab 310 can be contacted more sufficiently, so as to flatten the folded part of the tab 310 more efficiently.

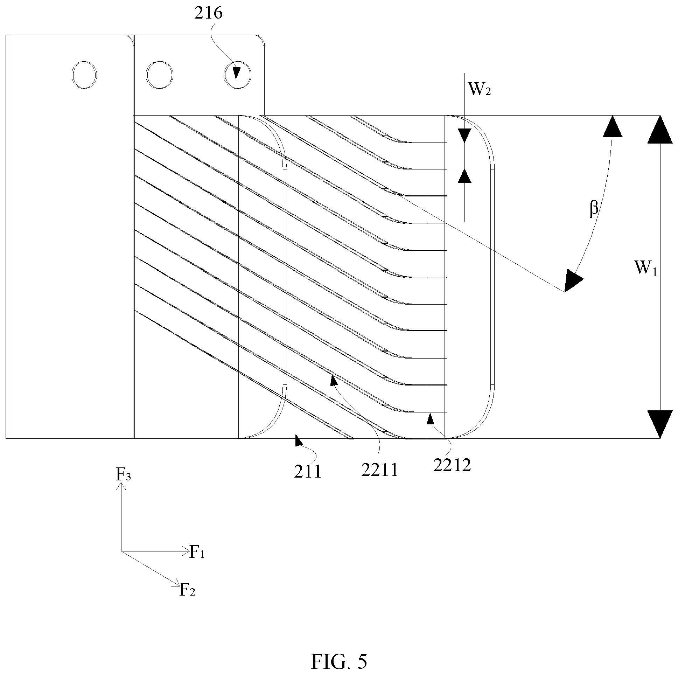

In some embodiments of this application, referring to FIG. 3 and FIG. 5, each of the flattening racks 221 includes a helical gear section 2211. The helical gear section 2211 is disposed obliquely in a width direction of the electrode plate 300.

The helical gear section 2211 of the flattening rack 221 is a part disposed at an angle to the first direction F1 on the flattening rack 221. The helical gear section 2211 of the flattening rack 221 extends along a second direction F2. The second direction F2 is at an angle to the first direction F1. The second direction F2 is parallel to the feed-in guide surface 211. Specifically, in the embodiments shown in FIG. 3 and FIG. 5, the first direction F1 is the length direction of the feed-in guide surface 211. The width direction of the feed-in guide surface 211 is parallel to the width direction of the electrode plate 300. The second direction F2 tilts relative to the length direction of the feed-in guide surface 211, and also tilts relative to the width direction of the feed-in guide surface 211.

By tilting the helical gear section 2211 in the width direction of the electrode plate 300, the same helical gear section 2211 is enabled to contact the folded part of the tab 310 more sufficiently, so as to ensure that a plurality of flattening racks 221 can apply a flattening force to the tab 310 more sufficiently to unfold the folded part of the tab 310, thereby improving the effect of flattening the tab 310.

In some embodiments of this application, referring to FIG. 3 and FIG. 5, the free end 2111 of the feed-in guide surface 211 points to a part of the feed-in guide surface 211 at the feed-in position along a first direction F1. An angle between the helical gear section 2211 and the first direction F1 is β, and β is 0° to 60°.

As mentioned above, the feed-in guide surface 211 at the feed-in position roughly corresponds to the position a in FIG. 3. In addition, β is set to a value in an appropriate range (0° to 60°). Such arrangement not only ensures a good effect of flattening the tab 310, but also avoids an impact caused during a flattening operation.

In some embodiments, β is 5° to 60°. If β is overly small, in a process of being passed in, the tab needs to travel a long distance before the helical gear section 2211 can sufficiently contact the folded part of the tab 310. Consequently, the effect of flattening the tab 310 is inferior, the flattening efficiency is low, and the debugging efficiency is also impaired. If β is overly large, the helical gear section 2211 contacts the folded part of the tab 310 quickly, and an impact is prone to occur. In view of this, β needs to be set to a value in an appropriate range. For example, β is set to 5° to 60°, thereby not only ensuring a good effect of flattening the tab 310, but also avoiding an impact caused during the flattening operation.

In some embodiments of this application, referring to FIG. 5, at least one of the flattening racks 221 further includes a straight gear section 2212. One end of the straight gear section 2212 is connected to the helical gear section 2211 in the flattening rack 221 in which the straight gear section is currently located, and another end of the straight gear section extends to the free end 2111 of the feed-in guide surface 211 along the first direction F1.

The straight gear section 2212 is roughly parallel to the first direction F1. The first direction F1 is a length direction of the feed-in guide surface 211.

"At least one of the flattening racks 221 further includes a straight gear section 2212" means: one of the flattening racks 221 further includes a straight gear section 2212; or, a plurality of the flattening racks 221 each include a straight gear section 2212; or, all the flattening racks 221 each include a straight gear section 2212, without being particularly limited herein.

In this way, the straight gear section 2212 extending along the first direction F1 can contact the turn-up part of the tab 310. With the tab 310 being passed in, the turn-up part of the tab 310 can be pressed down by using the straight gear section 2212, and the tab 310 is flattened gradually by use of the helical gear section 2211 to improve the effect of flattening the tab 310.

In some embodiments of this application, referring to FIG. 5, a width dimension of the plurality of flattening racks 221 arranged on the feed-in guide surface 211 is W₁, and W₁ is greater than a width of the tab 310. The width of the tab 310 is a dimension of the tab 310 in a direction parallel to a width direction of the electrode plate 300.

The width dimension of the plurality of flattening racks 221 arranged on the feed-in guide surface 211 means a dimension occupied by the plurality of flattening racks 221 on the feed-in guide surface 211 along a third direction F3. The third direction F3 is perpendicular to the first direction F1, and is parallel to the feed-in guide surface 211. Specifically, in the embodiment shown in FIG. 5, the first direction F1 is the length direction of the feed-in guide surface 211, and the third direction F3 is the width direction of the feed-in guide surface 211.

Understandably, the dimension of the folded part of the tab 310 in the direction parallel to the width direction of the electrode plate 300 is not greater than the width of the tab 310. In this way, by setting W₁ to be greater than the width of the tab 310, it is ensured that the plurality of flattening racks 221 can contact the folded part of the tab 310 more sufficiently, so as to facilitate the operation of flattening the folded part of the tab 310 and improve the effect of flattening the tab 310.

In some embodiments of this application, referring to FIG. 5, a distance between two adjacent flattening racks 221 is W₂, and W₂ is 3 mm to 5 mm.

If W₂ is overly small, the processing will be adversely affected, and the two adjacent flattening racks 221 are prone to clamp the tab 310 to give rise to tearing. If W₂ is overly large, the flattening effect will be impaired. Therefore, W₂ needs to fall within an appropriate range. For example, W₂ is set to 3 mm to 5 mm, so as to not only ensure a good effect of flattening the tab 310, but also make the tab 310 not prone to be clamped.

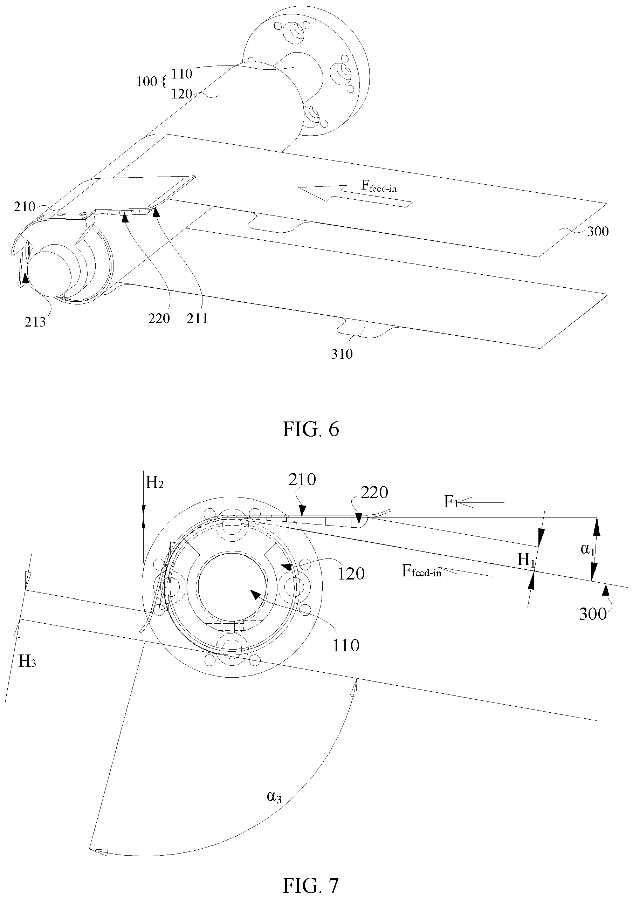

In some embodiments of this application, referring to FIG. 4 in conjunction with FIG. 6 to FIG. 8, the cover 210 further includes a curved corner surface 212 connected to the feed-in guide surface 211. The curved corner surface 212 is in clearance fit with an outer peripheral wall of the roller 100.

The "curved corner surface 212" is an arc-shaped surface connected to the feed-in guide surface 211 and capable of being in clearance fit with the outer peripheral wall of the roller 100.

After the folded part of the tab 310 is flattened by using the flattening portion 220 disposed protrusively on the feed-in guide surface 211, the tab 310 of the electrode plate 300 can be passed into the space between the curved corner surface 212 and the outer peripheral wall of the roller 100. The curved corner surface 212 can guide the tab 310 of the electrode plate 300, thereby improving the effect of flattening the tab 310.

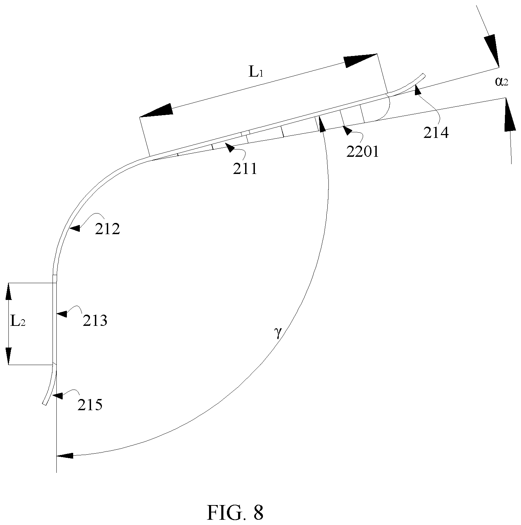

In some embodiments of this application, referring to FIG. 4 and FIG. 8, the cover 210 further includes a feed-out guide surface 213. The feed-out guide surface 213 and the feed-in guide surface 211 are connected to two ends of the curved corner surface 212 respectively in an arc length direction.

The "feed-out guide surface 213" is a surface that guides the tab 310 to pass through and move out of the region between the feed-out guide surface 213 and the roller 100.

On the one hand, after the flattening portion 220 flattens the folded part of the tab 310 and after the curved corner surface 212 guides the tab 310 of the electrode plate 300, the electrode plate 300 passes through and moves out of the region between the feed-out guide surface 213 and the roller 100 as guided by the feed-out guide surface 213. On the other hand, the electrode plate 300 is usually wound on a reel of the electrode plate. One end of the electrode plate 300 is conveyed by the roller 100. In this process, the tension of the electrode plate 300 is inevitably adjusted, thereby resulting in reverse winding of the electrode plate 300. In this case, the disposed feed-out guide surface 213 can guide the electrode plate 300 to get passed into the space between the feed-out guide surface 213 and the roller 100 during the reverse winding of the electrode plate 300.

In some embodiments of this application, referring to FIG. 2 and FIG. 7, the feed-out guide surface 213 is at an acute angle α₃ to a feed-out direction of the electrode plate 300, and α₃ is 1° to 45°. Understandably, the feed-out direction of the electrode plate 300 is parallel to the feed-in direction F of the electrode plate 300. Therefore, the feed-out guide surface 213 is also at an acute angle α₃ to the feed-in direction F of the electrode plate 300, and α₃ is 1° to 45°. This not only ensures that the electrode plate 300 is passed out smoothly, but also prevents the feed-out guide surface 213 from impacting and breaking the electrode plate 300 during the reverse winding of the electrode plate 300.

In some embodiments, referring to FIG. 4 and FIG. 8, the dimension of the feed-out guide surface 213 along the length direction of the feed-out guide surface 213 is L₂, and L₂ is roughly inversely proportional to α₃.

In some embodiments, referring to FIG. 2 and FIG. 7, the distance between a feed-out side of the feed-out guide surface 213 and the electrode plate 300 is H₃. Similarly, H₃ ≥ 1.25 × D, thereby more reliably preventing the feed-out guide surface 213 from impacting and breaking the electrode plate 300 during the reverse winding of the electrode plate 300.

In some embodiments of this application, referring to FIG. 4 and FIG. 8, the feed-out guide surface 213 is at an angle γ to the feed-in guide surface 211, and γ is 20° to 110°.

If γ is overly small, the tab 310 is prone to be jammed. If γ is overly large, the flattening effect of the tab flattening structure 200 is inferior. Therefore, γ needs to fall within an appropriate range to ensure a good flattening effect and avoid jamming of the tab 310.

In some embodiments of this application, referring to FIG. 4 and FIG. 8, the free end 2111 of the feed-in guide surface 211 includes a first turned-out arc face 214 extending out toward a side away from the electrode plate 300. The feed-in guide surface 211 is disposed along a tangential direction of the first turned-out arc face 214.

Understandably, the arc-shaped first turned-out arc face 214 can well protect the electrode plate 300 passed in, and prevent the electrode plate 300 from being damaged by an impact.

In some embodiments of this application, referring to FIG. 4 and FIG. 8, a second turned-out arc face 215 is disposed on a side of the feed-out guide surface 213, the side being away from the curved corner surface 212. The second turned-out arc face extends out toward the side away from the electrode plate 300. The feed-out guide surface 213 is disposed along a tangential direction of the second turned-out arc face 215.

Understandably, the arc-shaped second turned-out arc face 215 can well protect the electrode plate 300 that is reversely passed in during the reverse winding, and prevent the electrode plate 300 from being damaged by an impact.

In some embodiments of this application, referring to FIG. 1 and FIG. 3, the tab flattening device 10 further includes a mounting base 230. The mounting base 230 is a component capable of putting the cover 210 on the roller 100 and making the cover 210 surround the roller 100 peripherally. As an example, the mounting base 230 is sleeved on the fixed shaft 110 of the roller 100. A first mounting hole 216 is created on the cover 210, and a second mounting hole is created on the mounting base 230. The cover 210 is connected to the mounting base 230 by means of the first mounting hole 216 and the second mounting hole, so that the cover 210 is disposed on the roller 100 and the cover 210 is caused to surround the roller 100 peripherally. The first mounting hole 216 and the second mounting hole may be threaded holes. The cover 210 may be disposed on the roller 100 through bolts 217 that fit the threaded holes.

In some embodiments of this application, referring to FIG. 1 to FIG. 5, the tab flattening device 10 includes a roller 100 and a tab flattening structure 200. The tab flattening structure 200 includes a cover 210 and a flattening portion 220. The surface of the roller 100 is in contact with the electrode plate 300 in the contact region 1001. The cover 210 surrounds the contact region 1001 peripherally. The cover 210 includes a feed-in guide surface 211 oriented toward the contact region 1001. The flattening portion 220 is disposed protrusively on the feed-in guide surface 211, and located opposite to the tab 310 of the electrode plate 300. A tab guide surface 2201 is formed on the flattening portion 220. Along a feed-in direction of the electrode plate 300, the flattening portion 220 is at least partially located upstream of the contact region 1001. The distance (Hi) between the free end 2111 of the feed-in guide surface 211 and the electrode plate 300 is greater than the distance (H₂) between the feed-in guide surface 211 at the feed-in position and the electrode plate 300.

In this way, in the process of passing the electrode plate 300 into the space between the roller 100 and the tab guide surface 2201 along the feed-in direction F, the distance between the flattening portion 220 disposed protrusively on the feed-in guide surface 211 and the tab 310 of the electrode plate 300 also diminishes, thereby unfolding the folded part of the tab 310 more smoothly and playing a role of gradually flattening the tab 310 of the electrode plate 300.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments merely describe several implementations of this application. The description is relatively detailed, but constitutes no limitation on the patent scope hereof. It is hereby noted that several variations and improvements, which may be made to the embodiments by a person of ordinary skill in the art without departing from the concept of this application, fall within the protection scope of this application. Therefore, the protection scope of this application is subject to the claims appended hereto.

## Claims

1. A tab flattening device, **characterized in that** the device comprises:
a roller (100) configured to convey an electrode plate (300), wherein a surface of the roller (100) is in contact with the electrode plate (300) in a contact region (1001);
a cover (210), surrounding the contact region (1001) peripherally and comprising a feed-in guide surface (211) oriented toward the contact region (1001); and
a flattening portion (220), disposed protrusively on the feed-in guide surface (211), and located opposite to a tab (310) of the electrode plate (300), wherein a tab guide surface (2201) is formed on the flattening portion (220), and, along a feed-in direction of the electrode plate (300), the flattening portion (220) is at least partially located upstream of the contact region (1001).

2. The tab flattening device according to claim 1, **characterized in that**, the contact region (1001) comprises a feed-in position from which the electrode plate (300) is rolled in; a distance between a free end (2111) of the feed-in guide surface (211) and the electrode plate (300) is greater than a distance between the feed-in guide surface (211) at the feed-in position and the electrode plate (300).

3. The tab flattening device according to claim 2, **characterized in that**, the free end (2111) points to a part of the feed-in guide surface (211) at the feed-in position along a first direction, and the first direction is at an acute angle α₁ to the feed-in direction of the electrode plate (300).

4. The tab flattening device according to claim 3, **characterized in that** the angle α₁ is 1° to 45°.

5. The tab flattening device according to claim 4, **characterized in that** the angle α₁ is 7° to 15°.

6. The tab flattening device according to claim 3, **characterized in that**, the tab guide surface (2201) is disposed on a side of the flattening portion (220), the side being away from the feed-in guide surface (211); an angle between the feed-in guide surface (211) and the tab guide surface (2201) is α₂; and α₁ is greater than α₂.

7. The tab flattening device according to any one of claims 2 to 6, **characterized in that**, a distance between the free end (2111) of the feed-in guide surface (211) and the electrode plate (300) is Hi; and
a width of the tab (310) of the electrode plate (300) is D, satisfying: H₁ ≥ 1.25 × D, wherein
the width of the tab (310) is a dimension of the tab (310) in a direction parallel to a width direction of the electrode plate (300).

8. The tab flattening device according to any one of claims 2 to 7, **characterized in that**, a distance between the feed-in guide surface (211) at the feed-in position and the electrode plate (300) is H₂, and H₂ is 0 to 3 mm.

9. The tab flattening device according to any one of claims 2 to 8, **characterized in that**, the flattening portion (220) comprises a plurality of flattening racks (221) arranged at intervals on the feed-in guide surface (211), and each of the flattening racks (221) extends from the free end (2111) of the feed-in guide surface (211) toward a part of the feed-in guide surface (211) at the feed-in position.

10. The tab flattening device according to claim 9, **characterized in that** each of the flattening racks (221) comprises a helical gear section (2211), and the helical gear section (2211) is disposed obliquely in a width direction of the electrode plate (300).

11. The tab flattening device according to claim 10, **characterized in that**, the free end (2111) of the feed-in guide surface (211) points to a part of the feed-in guide surface (211) at the feed-in position along a first direction; and
an angle between the helical gear section (2211) and the first direction is β, and β is 0° to 60°.

12. The tab flattening device according to claim 11, **characterized in that** at least one of the flattening racks (221) further comprises a straight gear section (2212); and
one end of the straight gear section (2212) is connected to the helical gear section (2211) in the flattening rack (221) in which the straight gear section is currently located, and another end of the straight gear section extends to the free end (2111) of the feed-in guide surface (211) along the first direction.

13. The tab flattening device according to claim 9, **characterized in that**, a width dimension of the plurality of flattening racks (221) arranged on the feed-in guide surface (211) is W₁, and W₁ is greater than a width of the tab (310); and
the width of the tab (310) is a dimension of the tab (310) in a direction parallel to a width direction of the electrode plate (300).

14. The tab flattening device according to claim 9, **characterized in that**, a distance between two adjacent flattening racks (221) is W₂, and W₂ is 3 mm to 5 mm.

15. The tab flattening device according to any one of claims 1 to 14, **characterized in that**, the cover (210) further comprises a curved corner surface (212) connected to the feed-in guide surface (211), and the curved corner surface (212) is in clearance fit with an outer peripheral wall of the roller (100).

16. The tab flattening device according to claim 15, **characterized in that**, the cover (210) further comprises a feed-out guide surface (213), and the feed-out guide surface (213) and the feed-in guide surface (211) are connected to two ends of the curved corner surface (212) respectively in an arc length direction.

17. The tab flattening device according to any one of claims 1 to 16, **characterized in that**, the free end (2111) of the feed-in guide surface (211) comprises a first turned-out arc face (214) extending out toward a side away from the electrode plate (300), and the feed-in guide surface (211) is disposed along a tangential direction of the first turned-out arc face (214).
